# EUROPÄISCHE PATENTSCHRIFT

(11) **EP 3 386 817 B1**
(45) Veröffentlichungstag und Bekanntmachung des Hinweises auf die Patenterteilung: **16.02.2022**
(21) Anmeldenummer: 16805835.2
(22) Anmeldetag: 05.12.2016
(51) Int. Cl.: B60T 13/74

(54) **METHODEN UND VORRICHTUNGEN ZUM GESICHERTEN LÖSEN EINES ELEKTRISCHEN STELLGLIEDS MIT HILFE VON EINEM QUASIELASTISCHEN LÖSEENDANSCHLAG**
METHODS AND DEVICES FOR RELEASING AN ELECTRIC ACTUATOR IN A RELIABLE MANNER USING A QUASI-ELASTIC RELEASE END STOP
PROCÉDÉS ET DISPOSITIFS POUR DESSERRER DE FAÇON SÛRE UN ACTIONNEUR ÉLECTRIQUE À L'AIDE D'UNE BUTÉE DE DESSERRAGE QUASI-ÉLASTIQUE

(30) Priorität: 10.12.2015 DE 102015224761; 03.06.2016 DE 102016209784
(43) Veröffentlichungstag der Anmeldung: 17.10.2018
(73) Patentinhaber: Continental Teves AG & Co. OHG, 60488 Frankfurt am Main (DE)
(72) Erfinder: MARON, Christof, 61250 Usingen (DE); SCHNEIDER, Heinz-Anton, 65527 Niedernhausen (DE); BREITEN, Christian, 65462 Ginsheim-Gustavsburg (DE); SCHEIB, Ralf, 69483 Wald-Michelbach (DE); PÖFFEL, Lionel, 60487 Frankfurt am Main (DE); FROSCHAUER, Marco, 61440 Oberursel/TS. (DE); GIUSTO, Alessandro, 17100 Savona (IT); BREZZA, Giulio, 17100 Savona (IT); BOSCOLO, Luca, Cap 15018 Spigno Monferrato (IT); MERKER, Thomas, 65929 Frankfurt am Main (DE); TESSITORE, Luigi, 17100 Savona (IT); WINKLER, Thomas, 55131 Mainz (DE); MERKEL, Philipp, 65779 Kelkheim (DE); GÖRRISSEN, Niclas, 90478 Nürnberg (DE); BIJANZADEH, Pejman, 63069 Offenbach (DE); BAUER, Jürgen, 65187 Wiesbaden (DE); BALZ, Jürgen, 65510 Hünstetten-Oberlibbach (DE)
(74) Vertreter: Continental Corporation
(86) Internationale Anmeldenummer: PCT/EP2016/079725
(87) Internationale Veröffentlichungsnummer: WO 2017/097695

(56) Entgegenhaltungen:
- EP-A2- 1 894 804
- US-A1- 2014 095 042
- US-A1- 2014 156 141
- US-A1- 2015 217 743
- US-A1- 2015 217 750
- US-A1- 2015 345 580

## Beschreibung

Die vorliegende Erfindung betrifft eine Methode zum gesicherten Lösen eines elektrischen Stellglieds nach dem Oberbegriff des Patentanspruchs 1. Insbesondere betrifft die Erfindung elektronische Steuereinheiten zum Steuern oder Regeln eines seilzugbetätigten elektrischen Feststellbremssystems das subsidiär neben einem elektrohydraulischen Betriebsbremssystem einen Teilbestandteil eines Kraftfahrzeugbremssystems darstellt. Es wird angestrebt, dass mittels eines Bedienelements oder automatisch eine Feststellbremsfunktion über eine elektrische Stelleinheit elektromechanisch eingesteuert wird, die stromlos gehemmt ist, und wobei mittels des Bedienelements oder automatisch die Feststellbremse elektromechanisch lösbar ist, einschließlich die zugehörigen Betriebsverfahren zum entsprechenden Betätigen oder Lösen vom Feststellbremssystem.

Aus der EP 100 36 56 B1 geht ein open-loop-Ansteuerverfahren einer zentralen elektromotorischen Stelleinheit für die zwei seilzugbetätigten Radfeststellbremsen eines Kraftfahrzeugs hervor. Es wird demnach eine elektronische Steuervorrichtung einschließlich Steuerverfahren vorgeschlagen, welche Mittel zur Versorgung der elektrischen Stelleinheit mit vorbestimmten Strommengen beinhaltet. Dabei wird in Abhängigkeit von einer Verlagerung eines Steuerhebels oder Steuerorgans zuerst eine Abschätzung vorgenommen, auf deren Grundlage eine notwendige Strommenge für die elektrische Stelleinheit berechnet, und dann der elektrischen Stelleinheit zur Verfügung gestellt wird. Diesem bekannten System fehlt die Rückkopplung über das Verhalten vom Stellglied der Feststellbremse (betätigt oder gelöst). Die Abschätzung und Vorausberechnung einer Strommenge durch die elektronische Steuereinheit folgt Fuzzy-Logic-Grundsätzen, welche naturgemäß entsprechend unpräzise gefasst sind.

Aus der EP 966 376 B1 geht ein Feststellbremssystem umfassend Betätigungszug und Steuereinheit zur Ansteuerung von einem Stellglied einer Stelleinheit hervor. Dies beinhaltet einen doppelten closed-loop-Regelprozess und wobei zwei Messgrößen als Rückkopplung über Funktion und Zustand der Stelleinheit als Eingangssignale der elektronischen Steuereinheit Verwendung finden. Dies System erfordert zwingend zwei Sensoren zum Abgreifen der beiden Messgrößen, nämlich Kraft und Weg, um den Betätigungszug zu sensieren, was nicht nur eine entsprechend mechanisch aufwändige Bauweise von der Stelleinheit sondern auch einen entsprechend komplexen elektronischen Signalverarbeitungsprozess anhand doppelter Rückkopplung der Messgrößen in der elektronischen Steuereinheit beinhaltet. Der Zustand der Radbremse(n) wird ignoriert.

Die US 2014/095042 A1 betrifft eine, als Betriebsbremse sowie als Feststellbremse kombiniert konfigurierte Kraftfahrzeugbremsanlage inclusive Hinterachsscheibenbremsanlage, welche von einer Steuereinheit elektrisch sowie elektrohydraulisch angesteuert sind.

Die US 20215/345580 A1 bezieht sich ganz ohne Vernetzung auf eine einzelne elektrische DID-Feststellbremse mit einem angesteuerten elektrischen Antriebsmotor, dem eine Steuereinheit in Verbindung mit einer Strommesseinrichtung zugewiesen ist.

Es besteht daher ein Bedürfnis, Kraftfahrzeuge mit verbesserten Systemen zum Betrieb als Feststellbremse auszustatten, wobei der Aufwand vom closed-loop Verfahren vermieden wird und gleichzeitig in günstigem Arrangement eine verbesserte Stellpräzision ermöglicht ist. Zudem besteht der Wunsch, eine nützliche Problemlösung vorzulegen, die eine zukunftsfähige, also offene Systemstruktur ermöglicht, welche bei rationalisierter Sensorik eine bessere Feststell- bzw. Notbremsfunktion einschließlich abgesichertem Löseprozess wahrnehmen kann.

Zur Lösung dieser Problematiken wird erfindungsgemäß vorgeschlagen, dass
- ein Trommelbremssystem vorliegt,
- die Stelleinheit (4) über einen Löseendanschlag mit einer definierten Elastizität verfügt, wobei
- Annäherung, Berührung bzw. Anschlag zwischen Stellglied und Löseendanschlag eine besonders modulierte Änderung im Strombedarf der elektrischen Stelleinheit (4) rückkoppelt, die von der elektronischen Steuereinheit (3) beobachtet wird.

In Weiterbildung der erfindungsgemäßen Lösung ist vorgesehen, dass ein Löseprozess bzw. eine Unterbrechung oder Terminierung einer Bestromung von der elektronischen Steuereinheit automatisch beendet wird, wenn in der elektronischen Steuereinheit ein neuer Betätigungswunsch eingeht.

Zwecks gesicherter Umsetzung eines Bremsbetätigungswunschs (fremd- oder fahrerinitiiert) ist erfindungsgemäß vorgesehen, dass die elektronische Steuereinheit per Sensorinformation in einem ersten Verfahrensschritt eine Mindestzuspannkraft ermittelt, und dass in einem zweiten, nachgelagerten Schritt in Abhängigkeit von der ermittelten Mindestzuspannkraft anhand einer vorgegebenen Beziehung ein Abschaltstrom berechnet, und wobei in diese Berechnung wenigstens ein oder mehrere physikalische Parameter eingehen, und wobei sich der/die Parameter auf die ermittelte Mindestzuspannkraft, auf einen gemessenen Leerlaufstrombedarf, auf eine gemessene Versorgungsspannung, auf die gemessene Umgebungstemperatur, auf ein gemessenes Raddrehverhalten, auf eine ermittelte Hangneigung und/oder auf einen im Betriebsbremssystem eingespeisten hydraulischen Vordruck beziehen.

Zur erleichterten Entscheidung in der Datenverarbeitung vom Abschaltstrom empfiehlt es sich, dass die elektronische Steuereinheit auf Grundlage des berechneten Abschaltstroms grundsätzlich einen bestimmten vorgegebenen Abschaltstromgrenzwert iA zwecks vereinfachtem Soll-Ist-Vergleich beispielsweise aus einer eingespeicherten Tabelle auswählt oder ermittelt, und wobei eine Abschaltung durch die elektronische Steuereinheit vorgenommen wird, wenn ein Strombedarf den Abschaltstromgrenzwert iA erreicht oder überschreitet. Dabei kann in weiterer Ausgestaltung der Erfindung in vorteilhafter Weise vorgesehen sein, dass die elektronische Steuereinheit aus mehreren, und zueinander unterschiedlich hoch bemessenen, vorgegebenen Abschaltstromgrenzwerten auswählt. Diese unterschiedlich hoch bemessenen Abschaltstromgrenzwerte iA sind mit Vorteil deutlich zueinander abgestuft, so dass dadurch eine Spreizung ermöglicht wird. Folglich sind zumindest die geringfügigen Lastfälle (ohne Zuladung, Stillstand in der Ebene, Stauassistent), die üblichen Lastfälle (normale Zuladung, normale Feststellung), und die extrahohen Lastfälle (große Zuladung, starke Hangneigung, Fahrzeugverladung) mit reduziertem Aufwand in der Rückkopplung und dennoch flexibel unterscheidbar. Im Zweifel wird aus den gebotenen Werten jeweils der höher bemessene Abschaltstromgrenzwert iA ausgewählt, damit die Feststellbremsfunktion abgesichert erfolgt (select high).

Im Einzelnen empfiehlt sich ein Prozessablauf so, dass
a) die elektronische Steuereinheit die elektrische Stelleinheit unter fortgesetzter Messung des Strombedarfs bestromt und dabei den Strombedarf beobachtet, wobei
b) die elektronische Steuereinheit permanent oder periodisch den gemessenen Strombedarf i mit dem ausgewählten oder ermittelten Abschaltstromgrenzwert iA vergleicht, und dass
c) die elektronische Steuereinheit die Bestromung der elektrischen Stelleinheit unterbricht oder terminiert, wenn deren Strombedarf größer oder gleich dem Abschaltstromgrenzwert iA ist.

Mit besonderem Vorteil können die beschriebenen Betriebsverfahren wie auch eine zugehörige zentrale elektronische Steuereinheit mehrkanalig ausgebildet sein. Demzufolge ist diese zentrale elektronische Steuereinheit als gesonderte Baueinheit elektrisch mit der/den elektrischen Stelleinheit(en) verbunden und dazu geeignet und bestimmt, gleichzeitig, also parallel, das individuelle Management von diesen mehreren, radindividuell vorgesehenen elektrischen Radstelleinheiten zu übernehmen. Dabei erhält jede der elektrischen Radstelleinheiten von der zentralen elektronischen Steuereinheit individuelle Befehle also elektrische Signale bzw. Bestromung. Mit anderen Worten kann die elektronische Steuerung wie insbesondere die Abschaltung einschließlich die betreffende elektronische Datenverarbeitungen und Vorgänge radindividuell separat, also für jede elektrische Radstelleinheit individuell, von einer zentralen elektronischen Steuereinheit abgewickelt sein. Also ist diese zentral initiierte radindividuelle Steuerung/Regelung für zwei oder mehr Radbremsen grundsätzlich möglich. Es ist auch möglich, dass die elektronische Steuereinheit für jeden ihrer Kanäle gesonderte Hardware also mehrere Mikroprozessorkerne aufweist, oder die notwendige Rechenkapazität je Kanal auf einen einzigen Mikroprozessor aufteilt. Prinzipiell kann es sinnvoll sein, Hardware und/oder Software also Verfahren und Prozesse redundant vorzusehen bzw. zu betreiben, um Systemverfügbarkeit zu erhöhen und/oder parallel geführte Sicherheitsprozesse durch gegenseitige Überwachungsaufgaben zu ermöglichen.

Also erweitert die Erfindung die Einsatzmöglichkeiten von zentralen elektronischen Steuereinheiten indem unter Verzicht auf besondere Kraft- und Wegmesstechnik ein Löseendanschlag per Strombeobachtung erkannt wird, was die notwendige Sensorik und Rückkopplung rationalisiert und dennoch ermöglicht, dass jeder elektrischen Radbremsstelleinheit grundsätzlich eine radindividuelle Ansteuerung zukommen kann. Diese breite und offene Systemarchitektur eröffnet der Erfindung neue Anwendungsgebiete wie auch eine verbesserte Notbremsfunktion.

Einzelheiten der Erfindung sind nachfolgend an Hand bevorzugter Ausführungsbeispiele in Verbindung mit der beigefügten Zeichnung beschrieben.

In der Zeichnung zeigt jeweils schematisch:
Fig. 1 idealisiert-modellhafte Zusammenhänge zwischen Kraft (F) über einem Stellweg s, bezogen auf ein drehfest und axial verschieblich gelagertes Stellglied (Spindel) einer elektrischen Stelleinheit (Aktuator),
Fig. 2 idealisiert-modellhaft eine Stadienfolge I-V vom beobachteten Strombedarf I der elektrische Stelleinheit über der Zeit t, in Zusammenschau mit Fig. 1 zwecks Verdeutlichung vom Verfahren zur Rückkopplung vom Löseendanschlag (Lösestellung, Zuspannkraftfrei, Endanschlag),
Fig. 3 Ausführungsform eines einkanalig aufgebauten Systems,
Fig. 4 Ausführungsform eines vierkanalig aufgebauten Systems.

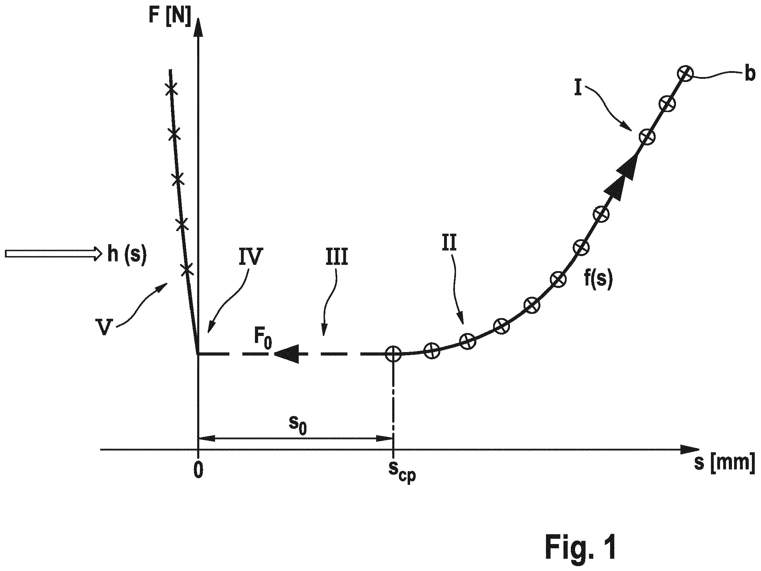

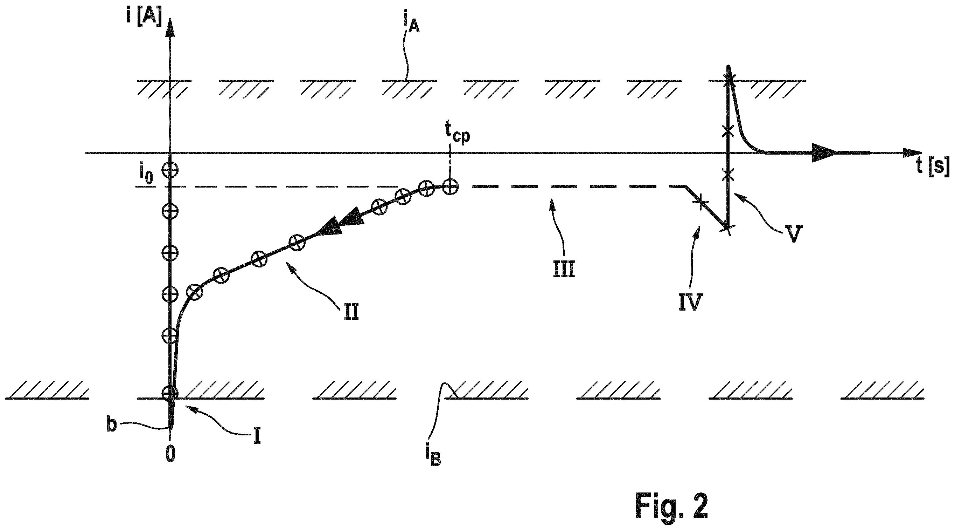

In den jeweils modellhaft-idealisierten Kennlinienverläufen ist ein elektromechanischer Zuspannprozess anhand von einem Doppelpfeil gekennzeichnet, während ein elektromechanischer Löseprozess in die umgekehrte Richtung per einfachem Pfeil symbolisiert ist. Dabei ist ein Stellglied (Betätigungszug, Spindel) einer elektrische Stelleinheit 3 jeweils in den gestrichelt (rot) oder mit Kreuzen (grün) gekennzeichneten Kennlinienabschnitten kraftfrei also gelöst. Ausschließlich in dem mit Kreuzen (grün) markierten Kennlinienbereich ist im Löseendanschlag eine besondere Elastizität wirksam. Die Wirksamkeit der Elastizität erfolgt in Abhängigkeit vom zurückgelegten Stellweg s. Die Elastizität wirkt als elastisch in den Kraftfluss der Lagerkräfte eingebundener Endanschlag mit der Folge, dass eine sensorlos detektierbare Kennlinienänderung im Strom-Zeitverlauf gegeben ist, die von der elektronischen Steuereinheit durch Beobachtung vom Stromverlauf verarbeitet und verwertet wird. Dies wird im Einzelnen dadurch bewirkt, dass das Stellglied mit Beginn der Phase IV sowie in der Phase V zunehmend von dem Elastoelement beaufschlagt ist. Ein anderer Kennlinienbereich, welcher in Figur 1+2 jeweils mit Kreisen verdeutlicht ist, betrifft demgegenüber den zugkraftbeanspruchten Stellbereich von der elektrische Stelleinheit. Ein Löseprozess wird, jeweils ausgehend vom Betätigungszustand b und in die Löserichtung betrachtet, also ganz grundsätzlich in die folgenden Prozessphasen aufgeteilt:
Phase I: Motoranlauf in Löserichtung (Bestromungsbeginn)
Phase II: Kraftabbau in Löserichtung
Phase III: Leerlauf in Löserichtung
Phase IV: Angriff am Elastoelement
Phase V: Aktionsende (Bestromungsende)

Es versteht sich, dass ein Zuspannprozess genau umgekehrt abläuft.

Aus Fig. 1 geht ein (Zug-)Kraftverlauf F über dem Stelleinheitstellweg s hervor. Dabei verdeutlicht ein Kennlinienzweig f(s) prinzipiell einen kräftemäßigen Zusammenhang zwischen Stellglied und Betätigungszug, also den Zweig der Zugkraftausübung zwischen Stellglied und Betätigungszug. Dieser Kennlinienzweig ist im Wegintervall des (zugkraftfreien) Leerwegs gestrichelt (rot) sowie im zugkraftbeanspruchten Wegintervall mit Kreisen (blau) markiert. Umgekehrt verdeutlicht ein Kennlinienzweig h(s), der jenseits vom 0-Punkt vorliegt, und zudem mit Kreuzen (grün) markiert ist, eine Kraftwirkung vom Elastoelement in Bezug auf das Stellglied. Diese Kraftwirkung tritt nur in einem Intervall zwischen dem Überfahren vom 0-Punkt und dem Erreichen vom hinteren Endanschlag auf. Diese Kraftwirkung vom Elastoelement ist der Lösebewegung der Stellglied entgegen gerichtet.

Wie aus Fig. 1 im Detail erhellt, überwindet die elektrische Stelleinheit entsprechend dem gestrichelt (rot) verdeutlichten Kennlinienteil beim Zuspannen mit der Phase III einen Leerweg s0 im Wesentlichen kraftfrei (F0). Mit dem Erreichen der Wegmarke scp wird in der Phase II Stellkraft (Zugkraft) aufgebaut. Zur Regelung wie insbesondere zur Ein- und Abschaltung der Bestromung dient die elektronische Steuereinheit. Sowohl beim Zuspannen als auch beim Lösen der elektrischen Stelleinheit wird der elektrische Stromverlauf von der elektronischen Steuereinheit beobachtet, und daraufhin analysiert, inwiefern eine signifikante Änderung im Strombedarf vorliegt. Dies dient zur Detektierung, ob einerseits die geforderte Zuspannkraft erreicht ist, oder andererseits der Lösezustand durch Anschlag am Löseendanschlag bei einem korrespondieren Abschaltstromgrenzwert iA erreicht worden ist, bevor die Stelleinheitbestromung beendet wird.

Die elektronische Steuereinheit beinhaltet einen Mikroprozessor mit Speicher und geht nach einer EDV-gestützten sowie softwarebasierten zyklisch ausgeführten Regelroutine anhand von einem softwarebasiert hinterlegten physikalischen Systemmodell davon aus, dass das Trommelbremssystem immer dann sicher in die Lösestellung transferiert ist, wenn die Bremsbacken ihre zuspannkraftfreie Lösestellung erreicht haben. Diese ist erreicht, wenn die Bremsbacken nur noch unter der Wirkung der vorgespannten Federelemente also zuspannkraftfrei aber dennoch definiert auf einer Abstützvorrichtung aufliegen. Die elektronische Steuereinheit detektiert daher entsprechend des genannten Modells die Phase V nachdem Phase III, also das zuspannkraftfreie Leerlaufniveau, bewältigt ist, und auch die Phase IV abgeschlossen wurde. Demzufolge wird überwacht und entsprechend erkannt ob der Stelleinheitstrombedarf als Antwort auf das Ende der Phase IV merklich sowie reproduzierbar abgesichert ansteigt. Mit anderen Worten wird die Besonderheit herangezogen, dass beim Einfahren der elektrische Stelleinheit in seine "hintere" sicher gelöste Endposition - also die Lösestellung jenseits vom 0-Punkt - durch elastische Verformung vom Elastoelement eine linear oder progressiv ansteigende, deutliche, Änderung im Verlauf der Strom-Zeit-Kennlinie eingeprägt wird. Dieser Tatbestand wird durch Kennlinienbeobachtung von der elektronischen Steuereinheit automatisch überwacht und erkannt. Nach Erkennung vom erreichen oder Überschreiten vom Abschaltstromgrenzwert iA wird die Stromversorgung der elektrischen Stelleinheit automatisch durch die elektronische Steuereinheit abgeschaltet, ohne dass Trägheitseffekte im Antriebsstrang der elektrischen Stelleinheit noch irgendwelche komfortbeeinträchtigenden Effekte (Nachlauf) erzeugen könnten. Nach Abschaltung der Bestromung verharrt der Antriebsstrang der elektrischen Stelleinheit augenblicklich, infolge Selbsthemmung in der erreichten Lösestellung.

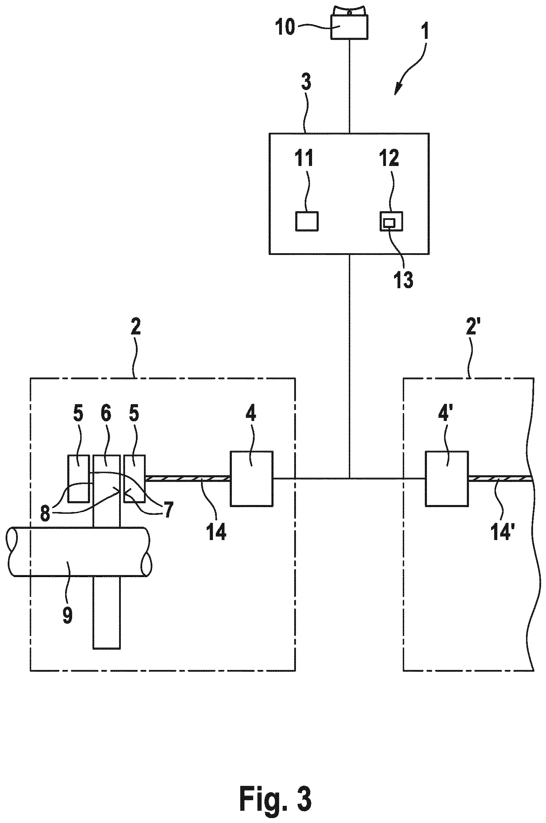

Die Figur 3 zeigt schematisch anhand einer ersten Ausführungsform exemplarisch eine einkanalig aufgebaute Bremsanlage 1 für zwei Radbremssysteme 2, 2" umfassend eine elektronische Steuereinheit 3 mit einem oder mehreren Mikroprozessoren 12, 13 die elektrisch mit wenigstens einem Bedienelement 10 verbunden ist, und zur bedarfsgerechten elektrischen Versorgung von einer elektrischen Stelleinheit 4 dient. Die elektronische Steuereinheit 3 beinhaltet einen oder mehrere Mikroprozessoren 12,13 die mit sensorisch gewonnen Informationen wie insbesondere mit Radrehinformationen beziehungsweise durch einen Sensor 11 zur Messung und Beobachtung vom Strombedarf der elektrischen Stelleinheit 4 gespeist wird. Jedes Radbremssystem 2,2'beinhaltet drehfest gelagerte Bremsbeläge 5 mit Reibflächen 7. Ein Rotor 6 ist drehbar auf einer Achse oder Nabe 9 vom nicht dargestellten Kraftfahrzeug gelagert, und verfügt über Reibflächen 8. Reibflächen 7 der Bremsbeläge 5 sind einer oder mehreren Reibflächen 8 zugewiesen. Elektrische Stelleinheit 4 und Bremsbeläge 5 sind grundsätzlich mechanisch über einen Betätigungszug 14 wirkungsverbunden, kann aber auch direktangetrieben sein, um Zug-Druck-Verstellung zu ermöglichen. Auf Grundlage der beschriebenen Parallelschaltung der beiden elektrischen Stelleinheiten 4,4' inden beiden Radbremssystemen 2,2' werden Bremswünsche dadurch bedarfsgerecht durch Erzeugung der entsprechend nachgefragten Bremswirkung anhand der beiden Radbremssysteme 2,2' im wesentlichen identisch umgesetzt. In dieser vereinfachten Gestaltung wird primär der summarische Strombedarf beider elektrischen Stelleinheiten 4, 4' an die elektronische Steuereinheit 3 rückgekoppelt.

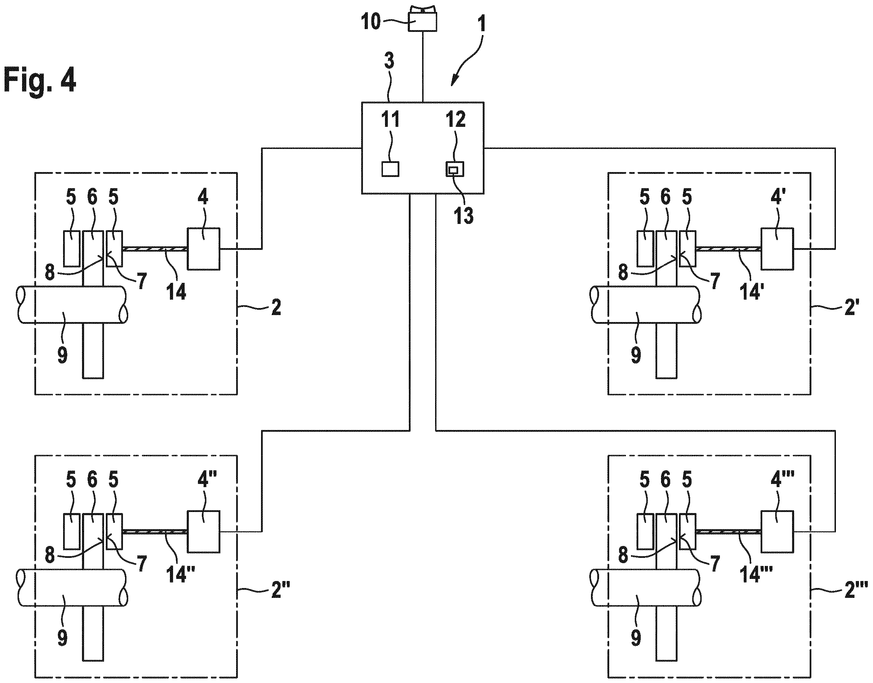

Wegen einer grundsätzlichen Übereinstimmung in den Komponenten wird nachstehend ausschließlich auf systematische Unterschiede in der Ausführungsform nach Fig. 4 eingegangen, wobei zur Vereinfachung auf die Komponentenbeschreibung in Fig. 3 zurück gegriffen wird. Aus Fig. 4 geht demnach ein vierkanaliger Aufbau hervor. Dabei ist die elektrische Stelleinheit 4,4′,4ʺ,4‴ jedes Radbremssystems 2,2′,2ʺ,2‴ individuell mit der elektronischen Steuereinheit 3 verbunden, und erhält zwecks radindividueller Steuerung bzw. Regelung eine individuelle Versorgung. In diesem Zusammenhang erfolgt die radindividuelle Trennung sämtlicher Steuer- und/oder Regelungsprozesse, einschließlich Rückkopplung unter Beobachtung vom Strombedarf, Abschaltstromgrenzwertvorgabe etc. Es sind auch Abwandlungen bzw. Vereinfachungen in der Trennung denkbar die eine Prozessbeschleunigung oder geringeren Rechenaufwand in der elektronischen Steuereinheit 3 erlauben können, soweit derartige Anpassung nachgefragt ist. Beispielsweise ist es möglich, die einzelnen Radbremssysteme 2,2′,2ʺ,2‴ elektrisch in beliebig adaptierbare Bremskreise, also systematisch gepaart, aufzuteilen, und wobei die Radbremssysteme 2,2′,2ʺ,2‴ eines Bremskreises grundsätzlich gleich nach dem Grundsatz "select low" behandelt und verarbeitet werden können oder eben radindividuell. Dadurch kann das jeweils kritischste Radbremssystem jeweils eine dominierende Führungsrolle, auch in der Regelung von den anderen, im selben Bremskreis beigeschalteten, Radbremssystemen zugewiesen bekommen. Demnach wird ein Sicherheitsgewinn erzielt, und instabile Fahrzeug (brems) zustände können vermieden werden. Obwohl die Fig. 4 ausdrücklich einen vierkanaligen Aufbau zeigt, können entsprechend beliebige andere Kanalzahlen gebildet werden (2-, 3- oder x-Kanalausführung).

### Bezugszeichenliste

1 Bremsanlage
2,2′,2ʺ,2‴ Radbremssystem
3 elektronische Steuereinheit
4,4′,4ʺ,4‴ elektrische Stelleinheit(en)
5 Bremsbelag
6 Rotor (Bremstrommel oder Bremsscheibe)
7 Reibfläche
8 Reibfläche
9 Achse, Radnabe
10 Bedienelement
11 Sensor
12 Mikroprozessor
13 Mikroprozessor
14,14′,14ʺ,14‴ Betätigungszug

## Patentansprüche

1. Verfahren zum gesicherten Lösen einer elektrischen Feststellbremse einer Bremsanlage (1) eines Kraftfahrzeugs mit einer elektronischen Steuereinheit (3) die eine elektrische Stelleinheit (4) versorgt, und die Steuereinheit (3) zum Steuern oder Regeln eines elektrischen Feststellbremssystems subsidiär neben einem elektrohydraulischen Betriebsbremssystem einen Teilbestandteil eines Kraftfahrzeugbremssystems darstellt, wobei mittels eines Bedienelements (10) oder automatisch ein Betätigungswunsch elektrisch generiert und durch die elektrische Stelleinheit (4) ausgeführt wird, und wobei mittels des Bedienelements (10) oder automatisch ein Lösewunsch elektrisch generiert und durch die elektrische Stelleinheit (4) ausgeführt wird,
- die elektronische Steuereinheit (3) im Löseprozess durch Bestromung der elektrischen Stelleinheit (4) ein Stellglied in Löserichtung fährt,
- dass die elektronische Steuereinheit (3) den Strombedarf der elektrischen Stelleinheit (4) beobachtet,
- die elektronische Steuereinheit (3) die Bestromung der elektrischen Stelleinheit (4) automatisch unterbricht, d a - **durchgekennzeichnet, dass**
- ein Trommelbremssystem vorliegt,
- die Stelleinheit (4) über einen Löseendanschlag mit einer definierten Elastizität verfügt, wobei
- Annäherung, Berührung bzw. Anschlag zwischen Stellglied und Löseendanschlag eine besonders modulierte Änderung im Strombedarf der elektrischen Stelleinheit (4) rückkoppelt, die von der elektronischen Steuereinheit (3) beobachtet wird.

2. Verfahren zum Lösen einer elektrischen Feststellbremse einer Bremsanlage (1) eines Kraftfahrzeugs nach Anspruch 1, **dadurchgekennzeichnet, dass** die Steuereinheit (3) einen Löseprozess beziehungsweise eine Unterbrechung oder Terminierung der Bestromung von der elektrischen Stelleinheit (4) automatisch revidiert, wenn in der elektronischen Steuereinheit (3) ein neuer Betätigungswunsch eingeht.

3. Verfahren zum gesicherten Lösen einer elektrischen Feststellbremse einer Bremsanlage (1) eines Kraftfahrzeugs nach einem oder mehreren der vorhergehenden Ansprüche, **dadurch gekennzeichnet, dass** die Steuereinheit (3) per Sensorinformation in einem ersten Verfahrensschritt eine Mindestzuspannkraft ermittelt, und dass die elektronische Steuereinheit (3) in einem zweiten, nachgelagerten Schritt in Abhängigkeit von der ermittelten Mindestzuspannkraft anhand einer vorgegebenen Beziehung einen Abschaltstrom berechnet, und wobei in diese Berechnung wenigstens ein oder mehrere physikalische Parameter eingehen, und wobei sich der beziehungsweise die physikalischen Parameter auf die ermittelte Mindestzuspannkraft, auf einen gemessenen Leerlaufstrombedarf io, auf eine gemessene Bordnetzspannung, auf die gemessene Umgebungstemperatur, auf ein gemessenes Raddrehverhalten und/oder auf einen im Betriebsbremssystem eingespeisten hydraulischen Vordruck beziehen.

4. Verfahren zum gesicherten Lösen einer elektrischen Feststellbremse einer Bremsanlage (1) eines Kraftfahrzeugs nach einem oder mehreren der vorhergehenden Ansprüche, **dadurch gekennzeichnet, dass** die elektronische Steuereinheit (3) auf Grundlage des berechneten Abschaltstroms einen definierten Abschaltstromgrenzwert (iA) auswählt, und wobei die Unterbrechung oder Terminierung der Bestromung durch die elektronische Steuereinheit (3) vorgenommen wird, wenn ein beobachteter Strombedarf den gewählten Abschaltstromgrenzwert (iA) erreicht oder überschreitet.

5. Verfahren zum gesicherten Lösen einer elektrischen Feststellbremse einer Bremsanlage (1) eines Kraftfahrzeugs nach einem oder mehreren der vorhergehenden Ansprüche, **dadurch gekennzeichnet, dass** die elektronische Steuereinheit (3) den Abschaltstromgrenzwert (iA) aus mehreren, und zueinander unterschiedlich hoch bemessenen, eingespeicherten, Tabellenwerten auswählt.

6. Verfahren zum gesicherten Lösen einer elektrischen Feststellbremse einer Bremsanlage (1) eines Kraftfahrzeugs nach einem oder mehreren der vorhergehenden Ansprüche, **dadurch gekennzeichnet, dass**
a) die elektronische Steuereinheit (3) die elektrische Stelleinheit (4) unter Messung vom Strombedarf bestromt und dabei den Strombedarf beobachtet,
b) die elektronische Steuereinheit (3) permanent oder periodisch den gemessenen Strombedarf mit einem ausgewählten Abschaltstromgrenzwert iA vergleicht, und dass
c) die elektronische Steuereinheit (3) die Bestromung der elektrischen Stelleinheit (4) unterbricht oder terminiert, wenn der beobachtete Strombedarf größer oder gleich dem Abschaltstromgrenzwert iA ist.

7. Verfahren zum gesicherten Lösen einer elektrischen Feststellbremse einer Bremsanlage (1) eines Kraftfahrzeugs nach einem oder mehreren der vorhergehenden Ansprüche, **dadurch gekennzeichnet, dass** Verfahren und/oder elektronische Steuereinheit (3) mit mehreren Kanälen ausgebildet ist/sind.

8. Verfahren zum gesicherten Lösen einer elektrischen Feststellbremse einer Bremsanlage (1) eines Kraftfahrzeugs nach einem oder mehreren der vorhergehenden Ansprüche, **dadurch gekennzeichnet, dass** jede von mehreren elektrischen Radstelleinheiten von einer zentralen elektronischen Steuereinheit (3) individuelle Befehle also elektrische Signale bzw. Bestromung erhält, so dass die elektronische Steuerung wie insbesondere die Abschaltung einschließlich die betreffende elektronische Datenverarbeitungen und Vorgänge radindividuell separat, für jede elektrische Radstelleinheit individuell, mit der zentralen elektronischen Steuereinheit (3) abgewickelt ist.

9. Elektronische Steuereinheit (3) umfassend ein Computerprogrammprodukt sowie Hardware mit wenigstens einem in einem Gehäuse gelagerten Mikroprozessor (12,13) und umfassend wenigstens eine elektrische/elektronische Schnittstelle für ein Kraftfahrzeug, und zur Ausführung des Verfahrens zum gesicherten Lösen zusätzlich mit den Merkmalen nach einem oder mehreren der Ansprüche 1-8 vorgesehen ist.

## Claims

1. Method for releasing an electric parking brake of a brake system (1) of a motor vehicle in a secured manner, said motor vehicle having an electronic control unit (3) which supplies an electric actuator unit (4), and the control unit (3) for performing open-loop or closed-loop control of an electric parking brake system constitutes a component of a motor vehicle brake system, in a subsidiary manner in addition to an electrohydraulic service brake system, wherein an activation request is generated electrically by means of an operator control element (10) or automatically and is executed by the electric actuator unit (4), and wherein a release request is generated electrically by means of the operator control element (10) or automatically and is executed by the electric actuator unit (4),
- the electronic control unit (3) moves an actuator element in the release direction in the release process by energizing the electric actuator unit (4),
- the electronic control unit (3) observes the power demand of the electric actuator unit (4),
- the electronic control unit (3) automatically interrupts the energization of the electric actuator unit (4), **characterized in that**
- a drum brake system is present,
- the actuator unit (4) has a release end stop with a defined elasticity, wherein
- approaching, formation of contact or impacting between the actuator element and the release end stop feeds back a particularly modulated change in the power demand of the electric actuator unit (4), which change is observed by the electronic control unit (3).

2. Method for releasing an electric parking brake of a brake system (1) of a motor vehicle according to Claim 1, **characterized in that** the control unit (3) automatically revises a release process or an interruption or a termination of the energization of the electric actuator unit (4) if a new activation request is received in the electronic control unit (3).

3. Method for releasing an electric parking brake of a brake system (1) of a motor vehicle in a secured manner according to either or both of the preceding claims, **characterized in that** the control unit (3) determines a minimum brake application force by means of sensor information in a first method step, and **in that** in a second subsequent step the electronic control unit (3) calculates a switch-off current as a function of the determined minimum brake application force using a predefined relationship, and wherein at least one or more physical parameters are included in this calculation, and wherein the physical parameter or parameters relate to the determined minimum brake application force, to a measured open-circuit power demand (io), to a measured on-board power system voltage, to the measured ambient temperature, to a measured wheel rotation behaviour and/or to a hydraulic admission pressure fed into the service brake system.

4. Method for releasing an electric parking brake of a brake system (1) of a motor vehicle in a secured manner according to one or more of the preceding claims, **characterized in that** the electronic control unit (3) selects a defined switch-off current limiting value (iA) on the basis of the calculated switch-off current, and wherein the interruption or termination of the energization is performed by the electronic control unit (3) if an observed power demand reaches or exceeds the selected switch-off current limiting value (iA)

5. Method for releasing an electric parking brake of a brake system (1) of a motor vehicle in a secured manner according to one or more of the preceding claims, **characterized in that** the electronic control unit (3) selects the switch-off current limiting value (iA) from a plurality of stored table values which are dimensioned differently with respect to one another.

6. Method for releasing an electric parking brake of a brake system (1) of a motor vehicle in a secured manner according to one or more of the preceding claims, **characterized in that**
a) the electronic control unit (3) energizes the electric actuator unit (4) while measuring the power demand and observes the power demand in the process,
b) the electronic control unit (3) continuously or periodically compares the measured power demand with a selected switch-off current limiting value (iA), and **in that**
c) the electronic control unit (3) interrupts or terminates the energization of the electric actuator unit (4) if the observed power demand is higher than or equal to the switch-off current limiting value (iA).

7. Method for releasing an electric parking brake of a brake system (1) of a motor vehicle in a secured manner according to one or more of the preceding claims, **characterized in that** the method and/or the electronic control unit (3) are/is embodied with a plurality of channels.

8. Method for releasing an electric parking brake of a brake system (1) of a motor vehicle in a secured manner according to one or more of the preceding claims, **characterized in that** each of a plurality of electric wheel actuator units receives individual commands, that is to say electrical signals or energization, from a central electronic control unit (3), so that the electronic control, such as in particular the switching off including the respective electronic data processing operations and processes can be executed separately on a wheel-specific basis, that is to say individually for each electric wheel actuator unit, by the central electronic control unit (3).

9. Electronic control unit (3) comprising a computer program product and hardware with at least one microprocessor (12, 13) which is mounted in a housing, and comprising at least one electric/electronic interface for a motor vehicle, and additionally being provided with the features according to one or more of Claims 1-8 in order to execute the method for releasing in a secured manner.

## Revendications

1. Procédé de desserrage sécurisé d'un frein de stationnement électrique d'un système de freinage (1) d'un véhicule automobile, comprenant une unité de commande électronique (3) qui alimente une unité de réglage électrique (4), et l'unité de commande (3) pour la commande ou la régulation d'un système de frein de stationnement électrique subsidiairement en plus d'un système de frein de service électrohydraulique représentant un composant partiel d'un système de frein de véhicule automobile, dans lequel, au moyen d'un élément de commande (10) ou automatiquement, un souhait d'actionnement est généré électriquement et exécuté par l'unité de réglage électrique (4), et dans lequel, au moyen de l'élément de commande (10) ou automatiquement, un souhait de desserrage est généré électriquement et exécuté par l'unité de réglage électrique (4),
- l'unité de commande électronique (3) poussant dans le processus de desserrage un actionneur dans la direction de desserrage en alimentant en courant l'unité de réglage électrique (4),
- l'unité de commande électronique (3) observant la demande en courant de l'unité de réglage électrique (4),
- l'unité de commande électronique (3) interrompant automatiquement l'alimentation en courant de l'unité de réglage électrique (4),
**caractérisé en ce que**
- un système de frein à tambour est présent,
- l'unité de réglage (4) dispose d'une butée d'extrémité de desserrage d'une élasticité définie, dans lequel
- l'approche, le contact ou la mise en butée entre l'actionneur et la butée d'extrémité de desserrage réinjecte une modification spécialement modulée de la demande en courant de l'unité de réglage électrique (4) qui est observée par l'unité de commande électronique (3).

2. Procédé de desserrage d'un frein de stationnement électrique d'un système de freinage (1) d'un véhicule automobile selon la revendication 1, **caractérisé en ce que** l'unité de commande (3) révise automatiquement un processus de desserrage ou une interruption ou un arrêt de l'alimentation en courant de l'unité de réglage électrique (4) si un nouveau souhait d'actionnement arrive dans l'unité de commande électronique (3).

3. Procédé de desserrage sécurisé d'un frein de stationnement électrique d'un système de freinage (1) d'un véhicule automobile selon une ou plusieurs des revendications précédentes, **caractérisé en ce que** l'unité de commande (3) détermine par des informations de capteur dans une première étape de procédé une force de serrage de fermeture minimale, et **en ce que** l'unité de commande électronique (3) calcule dans une deuxième étape ultérieure en fonction de la force de serrage de fermeture minimale déterminée un courant de coupure à l'aide d'une relation prédéfinie, et au moins un ou plusieurs paramètres physiques entrant dans ce calcul, et le ou les paramètres physiques faisant référence à la force de serrage de fermeture minimale déterminée, à une demande en courant au ralenti mesuré io, à une tension de réseau de bord mesurée, à la température ambiante mesurée, à un comportement de rotation de roue mesuré et/ou à une pression préalable hydraulique alimentée dans le système de frein de service.

4. Procédé de desserrage sécurisé d'un frein de stationnement électrique d'un système de freinage (1) d'un véhicule automobile selon une ou plusieurs des revendications précédentes, **caractérisé en ce que** l'unité de commande électronique (3) sélectionne sur la base du courant de coupure calculé une valeur limite de courant de coupure définie (iA), et l'interruption ou l'arrêt de l'alimentation en courant est effectué(e) par l'unité de commande électronique (3) si une demande en courant observée atteint ou dépasse la valeur limite de courant de coupure sélectionnée (iA).

5. Procédé de desserrage sécurisé d'un frein de stationnement électrique d'un système de freinage (1) d'un véhicule automobile selon une ou plusieurs des revendications précédentes, **caractérisé en ce que** l'unité de commande électronique (3) sélectionne la valeur limite de courant de coupure (iA) parmi plusieurs valeurs de tableau mémorisées, fixées à des niveaux différents les unes par rapport aux autres.

6. Procédé de desserrage sécurisé d'un frein de stationnement électrique d'un système de freinage (1) d'un véhicule automobile selon une ou plusieurs des revendications précédentes, **caractérisé en ce que**
a) l'unité de commande électronique (3) alimente en courant l'unité de réglage électrique (4) en mesurant la demande en courant et en observant la demande en courant,
b) l'unité de commande électronique (3) compare de manière permanente ou périodique la demande en courant mesurée avec une valeur limite de courant de coupure sélectionnée iA, et **en ce que**
c) l'unité de commande électronique (3) interrompt ou arrête l'alimentation en courant de l'unité de réglage électrique (4) si la demande en courant observée est supérieure ou égale à la valeur limite de courant de coupure iA.

7. Procédé de desserrage sécurisé d'un frein de stationnement électrique d'un système de freinage (1) d'un véhicule automobile selon une ou plusieurs des revendications précédentes, **caractérisé en ce que** le procédé et/ou l'unité de commande électronique (3) est/sont réalisés avec plusieurs canaux.

8. Procédé de desserrage sécurisé d'un frein de stationnement électrique d'un système de freinage (1) d'un véhicule automobile selon une ou plusieurs des revendications précédentes, **caractérisé en ce que** chacune parmi plusieurs unités de réglage de roue électriques reçoit de la part d'une unité de commande électronique centrale (3) des instructions individuelles, c'est-à-dire des signaux électrique ou une alimentation en courant, de sorte que la commande électronique, comme en particulier la coupure y compris les traitements de données électroniques et opérations concernés, est gérée séparément pour chaque roue individuelle, individuellement pour chaque unité de réglage de roue électrique, par l'unité unité de commande électronique centrale (3).

9. Unité de commande électronique (3), comprenant un produit de programme informatique ainsi que du matériel avec au moins un microprocesseur (12, 13) monté dans un boîtier, et comprenant au moins une interface électrique/électronique pour un véhicule automobile, et pour exécuter le procédé de desserrage sécurisé, étant en plus pourvue des particularités selon une ou plusieurs des revendications 1 à 8.
